# EUROPEAN PATENT SPECIFICATION

(11) **EP 3 316 752 B1**
(45) Date of publication and mention of the grant of the patent: **12.01.2022**
(21) Application number: 16736731.7
(22) Date of filing: 29.06.2016
(51) Int. Cl.: A47L 9/04, A47L 9/28

(54) **VACUUM CLEANER WITH BRUSHROLL CONTROL**
STAUBSAUGER MIT BÜRSTENROLLENSTEUERUNG
ASPIRATEUR DOTÉ D'UNE COMMANDE DE CYLINDRE BROSSEUR

(30) Priority: 30.06.2015 US 201562187001 P; 30.06.2015 US 201562186998 P
(43) Date of publication of application: 09.05.2018
(73) Proprietor: TECHTRONIC INDUSTRIES CO. LTD., Tsuen Wan, New Territories, Hong Kong (CN)
(72) Inventor: GORDON, Evan, Canton, OH 44714 (US); SEBASTIAN, Will, Sagamore Hills, OH 44067 (US); TRUITT, Patrick, Mooresville, NC 28117 (US); SUMRAIN, Shadi, Hudson, OH 44236 (US)
(74) Representative: Forresters IP LLP
(86) International application number: PCT/US2016/039974
(87) International publication number: WO 2017/004131

(56) References cited:
- WO-A1-97/07728
- US-A1- 2006 085 095

## Description

### CROSS-REFERENCE TO RELATED APPLICATIONS

This application claims priority to U.S. Provisional Patent Application No. 62/186,998, filed June 30, 2015 and claims priority to U.S. Provisional Patent Application No. 62/187,001, filed June 30, 2015.

### BACKGROUND

The present invention relates to vacuum cleaners, and more particularly to vacuum cleaners with a brushroll.

### SUMMARY

In one aspect, the invention provides a vacuum cleaner including a base having a floor nozzle that defines a suction chamber, a brushroll driven by a brushroll motor, and a brushroll motor sensor configured to measure an electrical current used by the brushroll motor. The vacuum cleaner further includes a pressure sensor configured to measure an internal pressure within the vacuum cleaner, and a controller in communication with the brushroll motor sensor and the pressure sensor. The controller is operable to control an operating speed of the brushroll motor based on feedback received from the pressure sensor and the brushroll motor sensor.

In another aspect, the invention provides a method of controlling a brushroll motor in a vacuum cleaner. The method includes sensing a pressure within the vacuum cleaner, sensing a motor current of the brushroll motor used to drive the brushroll, comparing the sensed pressure with one or more reference pressure values, comparing the motor current with one or more reference current values, and controlling operation of the brushroll motor based on the sensed pressure and motor current. Controlling operation of the brushroll motor includes turning the brushroll motor on based on the sensed pressure.

In another aspect, the invention provides a method of controlling a brushroll motor in a vacuum cleaner. The method includes sensing an electrical current used by the brushroll motor to drive the brushroll at a first speed, sensing the speed of the brushroll motor or the brushroll, varying the electrical current to maintain the first speed of the brushroll, and determining a change in current drawn by the brushroll motor to maintain the first speed of the brushroll. The method also includes comparing the change in current to a threshold current change value, maintaining the first brushroll speed when the change in current is less than the threshold current change value, and maintaining a second brushroll speed different than the first brushroll speed when the change in current is greater than the threshold current change value.

Other aspects of the invention will become apparent by consideration of the detailed description and accompanying drawings.

### BRIEF DESCRIPTION OF THE DRAWINGS

FIG. 1 is a perspective view of a vacuum cleaner according to an embodiment of the invention.
FIG. 2 is a perspective view of a base of the vacuum cleaner of FIG. 1, with a portion removed.
FIG. 3 is a bottom view of the base of FIG. 2.
FIG. 4 is a top view of the base of FIG. 2, with a portion removed.
FIG. 5 is a perspective view of the base of FIG. 2, with a portion removed.
FIG. 6 is a perspective view of a portion of a pressure sensor used in the base of FIG. 2.
FIG. 7 is a perspective view of a portion of the pressure sensor used in the base of FIG. 2.
FIG. 8 is a perspective view of a portion of the pressure sensor used in the base of FIG. 2.
FIG. 9 is a cross-sectional view of a portion of the base of FIG. 2.
FIG. 10 is a graph illustrating suction and brushroll motor data for a vacuum cleaner passing from carpet to hard floor.
FIG. 11 is a block diagram illustrating the interaction between various sensors, a controller, and brushroll elements.
FIG. 12 is a perspective view of a pressure sensor according to another embodiment.
FIG. 13 is a cross-sectional view of the pressure sensor of FIG. 12.
FIG. 14 is an exploded view of a portion of the pressure sensor of FIG. 12.
FIG. 15 is a graph illustrating pressure and voltage correlation data for the pressure sensor of FIG. 11 in a variety of operating conditions.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

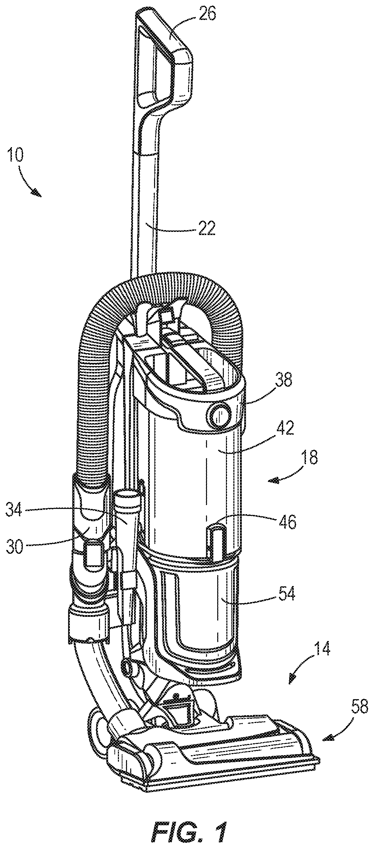

FIG. 1 illustrates an exemplary vacuum cleaner 10. The illustrated vacuum cleaner 10 is an upright vacuum cleaner and includes a base assembly 14 and a handle assembly 18 pivotally coupled to the base assembly 14. In other embodiments, other types and styles of vacuum cleaners can be utilized (e.g., canister, handheld, utility, etc.).

In the illustrated embodiment of the vacuum cleaner 10, the base assembly 14 is movable along a surface to be cleaned, such as a carpeted or hard-surface floor. The handle assembly 18 extends from the base assembly 14 and allows a user to move and manipulate the base assembly 14 along the surface. The handle assembly 18 is also movable relative to the base assembly 14 between an upright position (FIG. 1) and an inclined position (not shown).

The handle assembly 18 includes a maneuvering handle 22 having a grip 26 for a user to grasp and maneuver the vacuum cleaner 10. In the illustrated embodiment, the vacuum cleaner 10 also includes a detachable wand 30. The wand 30 may be used to clean above-floor surfaces (e.g., stairs, drapes, corners, furniture, etc.). An accessory tool 34 (e.g., a crevice tool, an upholstery tool, a pet tool, etc.) is detachably coupled to the handle assembly 18 for storage and may be used with the wand 30 for specialized cleaning.

With continued reference to FIG. 1, a canister 38 is supported on the handle assembly 18 and includes a separator 42 and a dirt cup 46. The separator 42 removes dirt particles from an airflow drawn into the vacuum cleaner 10 which are then collected by the dirt cup 46. The separator 42 may be a cyclonic separator, filter bag, or other separator as desired. In the illustrated embodiment, the canister 38 including the dirt cup 46 is removable from the handle assembly 18 to facilitate emptying the dirt particles from the dirt cup 46.

The vacuum cleaner 10 further includes a suction motor (not shown) contained within a motor housing 54 (FIG. 1) and a suction source (not shown), such as an impeller fan assembly, driven by the suction motor. The suction motor selectively receives power from a power source (e.g., a cord for plugging into a source of utility power, a battery, etc.) to generate the suction airflow through the vacuum cleaner 10.

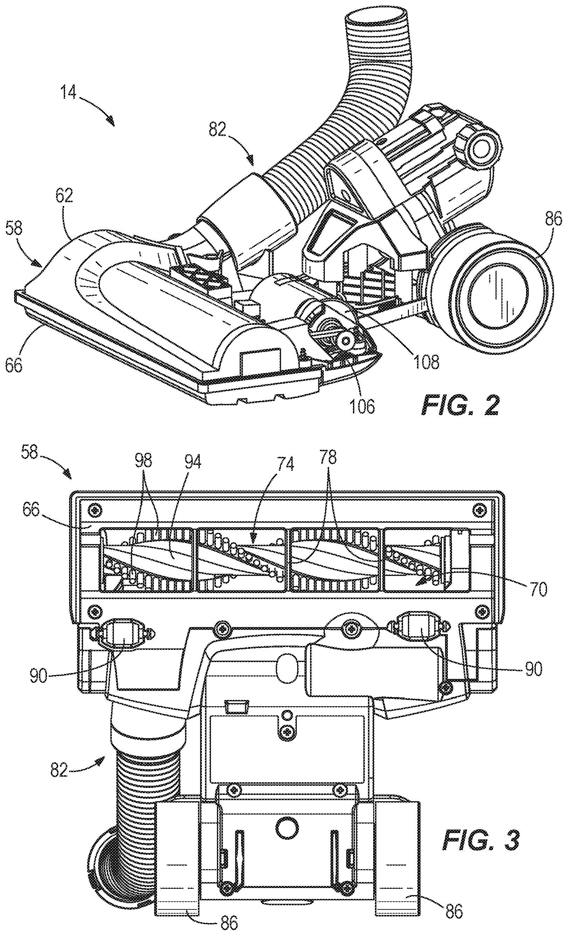

Now referring to FIGS. 2-4, the base assembly 14 includes a suction nozzle or floor nozzle 58 having a suction chamber 70 (FIG. 3). In the illustrated embodiment, the suction chamber 70 is formed between an upper portion 62 and a lower portion 66 of the floor nozzle 58 (FIG. 2). Air and debris may be drawn into the suction chamber 70 through an elongate inlet opening 74 in the lower portion 66 (FIG. 3). In the illustrated embodiment, a plurality of cross bars 78 are positioned across the opening 74 inhibiting ingress of electrical cords and other objects into the opening 74. In other embodiments, the cross bars 78 may be omitted. After entering the suction chamber 70, air and debris pass through a nozzle outlet 82 that fluidly communicates with the separator 42.

Optionally, the base assembly 14 includes a pair of rear wheels 86 and a pair of forward supporting elements or wheels 90 spaced from the rear wheels 86 and located generally adjacent the inlet opening 74. The wheels 86, 90 facilitate movement of the base assembly 14 along the surface to be cleaned. In addition, the forward wheels 90 may assist in positioning the inlet 74 of the floor nozzle 58 at a desired height above the surface to be cleaned.

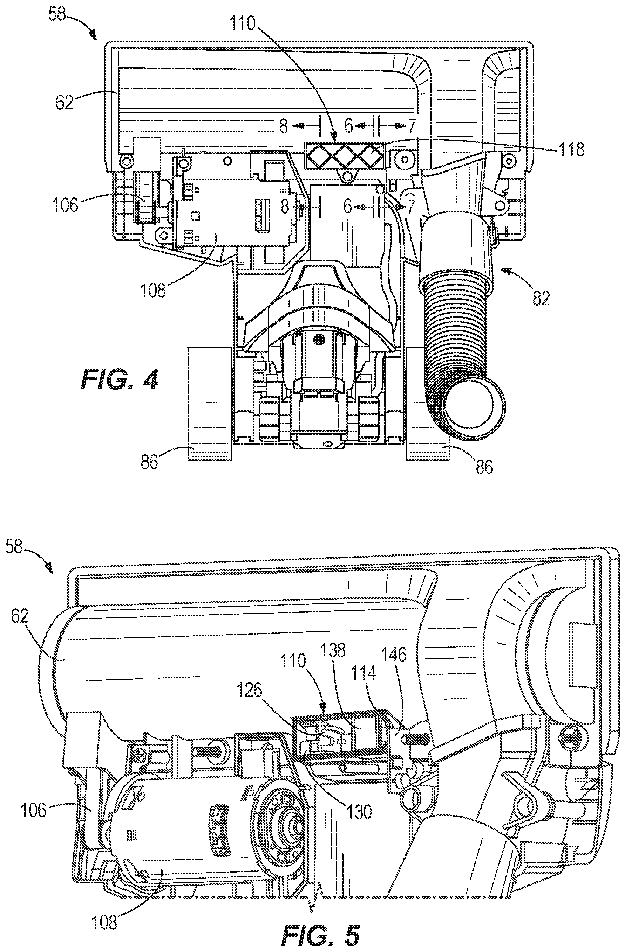

With reference to FIG. 3, an agitator or brushroll 94 is rotatably supported at its ends within the nozzle suction chamber 70. The brushroll 94 includes an array of bristle tufts 98 or other protrusions that may extend through the opening 74 to agitate the surface to be cleaned. The agitator 94 is rotatably driven by a drive belt 106 (FIG. 4) that receives power from a brushroll motor 108. In the illustrated embodiment, the brushroll motor 108 drives the brushroll 94, while the suction motor drives the suction source. In other embodiments, a single motor may be provided to drive the suction source and the brushroll 94.

With reference to FIG. 4, the floor nozzle 58 also includes a pressure sensor 110. The illustrated pressure sensor 110 is in communication with the suction chamber 70 (FIG. 3) for determining a nozzle suction pressure within the floor nozzle 58. Alternatively, the pressure sensor 110 can be used to determine a nozzle suction pressure in any other type of nozzle, such as an accessory wand or other above-floor cleaning attachment. The illustrated pressure sensor 110 is disposed proximate the suction chamber 70; however, in other embodiments, the pressure sensor 110 can be located remote from the suction chamber 70. In such embodiments, the pressure sensor 110 can monitor the nozzle suction pressure via a tube or other suitable means having an end exposed to the suction chamber 70.

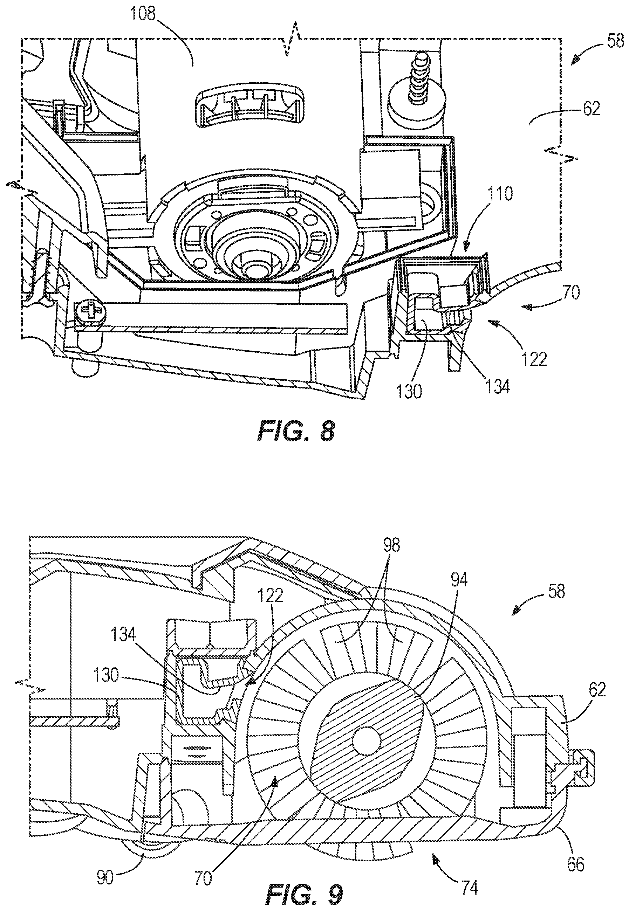

The illustrated pressure sensor 110 includes a pressure sensor housing 114 (FIG. 5) defining a chamber that is at least partially enclosed by a pressure sensor cap portion 118. The upper portion 62 of the floor nozzle 58 includes an aperture between the pressure sensor housing 114 and the suction chamber 70 forming a pressure sensor inlet 122 (FIGS. 8 and 9) to allow for fluid communication between the pressure sensor 110 and the suction chamber 70. With reference to FIG. 5, the housing includes an internal wall 126 dividing the inner chamber of the pressure sensor 110 such that the inlet 122 is at least partially isolated from the remainder of the pressure sensor 110. The internal wall 126 includes an aperture that allows for fluid communication between the inlet 122 and the remainder of the pressure sensor 110 while providing a barrier to inhibit the intake of dust particles and debris flowing through the suction chamber 70. In the illustrated embodiment, the aperture is a U-shaped opening in the internal wall 126.

Referring to FIGS. 8 and 9, the pressure sensor 110 also includes an inlet guard 130 positioned adjacent to the inlet 122 to further limit the intake of dust particles and debris into the pressure sensor 110. The inlet guard 130 may attach to the inlet 122. Further, the inlet guard 130 may be shaped in various ways to provide desirable flow characteristics within the suction chamber 70 and/or the chamber of the pressure sensor 110. For example, the illustrated inlet guard 130 provides a sloped surface 134 such that the area of the inlet 122 decreases in a direction toward the interior of the pressure sensor 110, allowing fewer particles to enter the pressure sensor chamber.

The pressure sensor housing 114 may be integrally formed in the floor nozzle 58. The pressure sensor housing 114 may be integrally formed in the upper portion 62. Alternatively, the pressure sensor housing 114 may be a separate component assembled to the vacuum cleaner 10. Alternatively or additionally, the air inlet 122 of the pressure sensor 110 may be configured as a fitting, optionally with a barb feature at an end of the fitting, or a threaded fitting, or compression fitting, or other fitting, to be in fluid communication with the suction chamber 70 using a duct or a tube connected to the fitting.

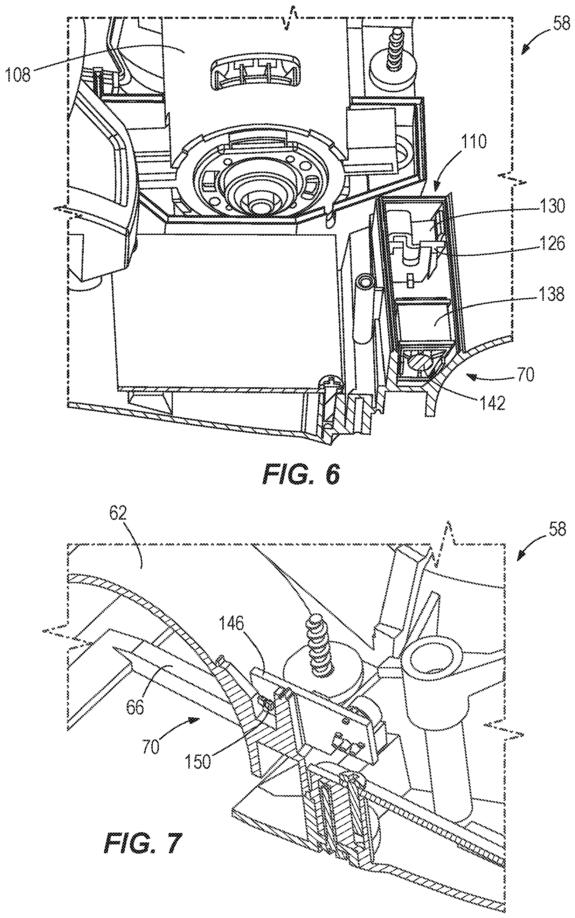

With reference to FIGS. 6 and 7, the illustrated pressure sensor 110 also includes a piston block 138 holding a magnet 142 that is movable with respect to a hall-effect sensor 150. In the illustrated embodiment, the hall-effect sensor 150 is mounted to a circuit board 146. The piston block 138 is forced toward the hall-effect sensor 150 by a spring (not shown), which may be positioned between the internal wall 126 and the piston block 138, while negative pressure within the suction chamber 70 generated by the suction source pulls on the piston block 138, tending to overcome the force of the spring and move the piston block 138 and magnet 142 away from the sensor 150. Therefore, the relative distance of the piston block 138 from the hall-effect sensor 150 can be correlated to the suction pressure within the chamber 70. Specifically, the higher the suction (i.e., the lower the pressure) within the suction chamber 70, the further the piston block 138 moves away from the sensor 150 against the force of the spring, and vice versa. The hall-effect sensor 150 and magnet 142 are used to determine the relative distance between the piston block 138 and the sensor 150 to compute a sensed pressure. It should be understood that in other embodiments, other types of pressure sensors may be used, such as optical, piezoresistive, and the like.

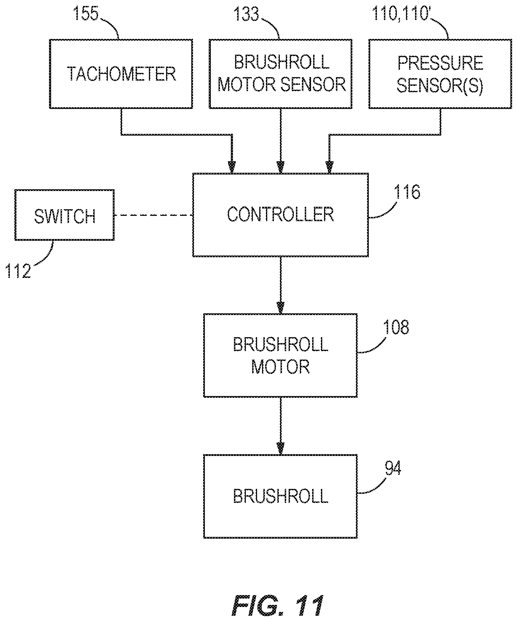

With reference to FIG. 11, the vacuum cleaner 10 further includes a brushroll motor sensor 133 and a controller 116 in communication with the sensors 110, 133. The brushroll motor sensor 133 can be configured to sense a torque output or current draw of the brushroll motor 108. The controller 116 can receive and analyze data from the pressure sensor 110 and the brushroll motor sensor 133 and use some or all of that data as feedback to control the rotational speed of the brushroll motor 108.

In general operation, the suction motor drives the fan assembly or suction source to generate airflow through the vacuum cleaner 10. The airflow enters the floor nozzle 58 through the inlet opening 74 and flows into the suction chamber 70 (FIG. 3). The airflow and any debris entrained therein then travel through the nozzle outlet 82 and into the separator 42. After the separator 42 filters or otherwise cleans the airflow, the cleaned airflow is directed out of the canister 38 and into the motor housing 54, (e.g., through an airflow channel extending through the handle assembly 18) (FIG. 1). The cleaned airflow is ultimately exhausted back into the environment through air outlet openings.

With reference to FIG. 11, during operation, the controller 116 receives the data from the sensors 110, 133 and compares the sensed pressure from the pressure sensor 110 and the sensed current and/or torque values from the brushroll motor sensor 133 with one or more corresponding predetermined thresholds. The predetermined thresholds (i.e., pressure, torque, and/or current) are associated with different floor types to represent a distinction between floor surfaces (e.g., carpet and hard floor). The controller 116 determines the floor surface by comparing the sensed pressure and the sensed motor current and/or torque values with the predetermined thresholds, and automatically operates the brushroll motor 108, and optionally the suction motor, in a manner optimized for the type of floor surface. For example, high-pile carpet will generally cause high suction (i.e., low pressure) within the suction chamber 70 and force the brushroll motor 108 to work harder (i.e., generate higher torque and draw more current), while a hard floor surface will lead to lower suction (i.e., higher pressure that is closer to atmospheric pressure) within the suction chamber 70 and will allow the brushroll motor 108 to work more easily (i.e., generate lower torque and draw less current).

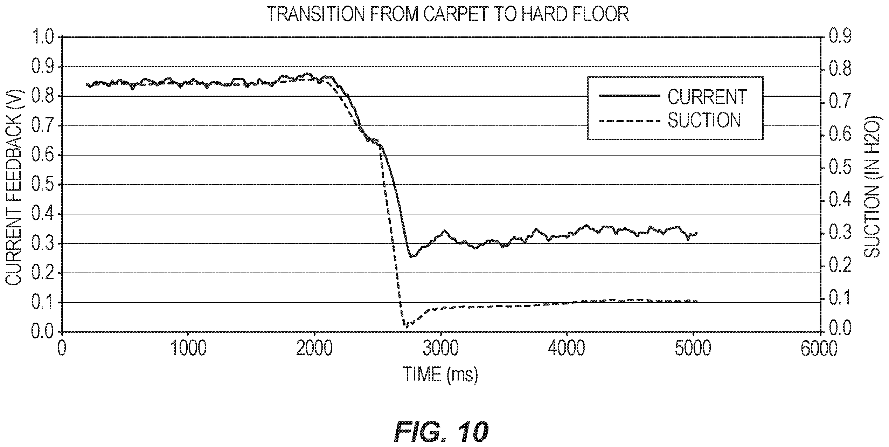

FIG. 10 illustrates exemplary suction and brushroll motor data for a vacuum cleaner passing from carpet to hard floor. Depending on the comparison of the sensed pressure, torque, and/or current with their corresponding threshold values, the controller 116 operates the brushroll motor 108 in a desired state to drive the brushroll motor 108 at a desired speed. For example, the controller 116 may operate the brushroll motor 108 at a slow rotational speed when the floor nozzle 58 is located on a hard floor surface to reduce scattering of debris and reduce energy consumed by the brushroll motor 108. Further, the controller 116 may operate the brushroll motor 108 at a high rotational speed while the floor nozzle 58 is on carpet to better agitate dust particles out of the carpet fibers. Alternatively, the controller 116 may shut off the brushroll motor 108 when the floor nozzle 58 is located on certain surfaces (e.g., hard floor), to conserve energy, reduce scattering of debris, and/or reduce wear on delicate surfaces.

The controller 116 may also or alternatively operate the suction motor based on floor type. For example, the controller 116 may operate the suction motor at a lower power on a hard floor surface to conserve energy or a higher power on a hard floor surface to increase debris pick-up. In some embodiments, the suction motor may be operated at a lower power on certain height carpets to reduce the clamp-down of the nozzle 58 to the carpet so that the vacuum cleaner 10 is easier to push.

By continuously or intermittently monitoring pressure and motor current and/or torque using data from the sensors 110, 133, the controller 116 determines when the vacuum 10 passes from one surface type to another surface type and alters the brushroll speed, and optionally suction, to provide a pre-programmed vacuum cleaner operation in response to the different conditions created by different floor types. Either or both of the pressure sensor 110 and the brushroll motor sensor 133 may be continually used to alter the rotational speed of the brushroll motor 108 in response to the sensed data. If the brushroll motor 108 is off, however, only the pressure sensor 110 is used to determine a change in floor type.

Referring to FIG. 11, a switch 112 may be provided to allow a user to selectively switch between different modes of operation, such as to put the vacuum cleaner 10 in a "speed control mode." in which the controller 116 changes the rotational speed of the brushroll motor 108 (and the brushroll 94) in response to the sensed data, or in an "on/off mode", in which controller 116 turns the brushroll motor 108 on or off in response to the sensed data. Such a switch may be positioned for easy access by a user for changing the operational mode of the vacuum cleaner 10. In certain applications, either the speed control mode or the on/off mode may be preferred by the manufacturer, and the switch 112 may be positioned in a less accessible location to a user, such as behind a cover so that the switch 112 may be accessible to a user only if the cover or other portion of the floor nozzle 58 is removed. In some embodiments, the switch 112 is provided on the circuit board 146.

While the vacuum cleaner 10 is operated in the "speed control mode," the pressure sensor 110 and the brushroll motor sensor 133 continuously or intermittently provide sensed data representative of the suction pressure and the motor current and/or torque, as described above. When the sensed data of the pressure sensor 110 and the brushroll motor sensor 133 correspond to the values associated with the vacuum cleaner 10 operating on a carpet surface, or the like, the controller 116 operates the brushroll motor 108 at a first rotational speed, for example, between about 1000 and 5000 revolutions per minute (RPM), or between about 2000 and 4000 RPM. When the sensed data of the pressure sensor 110 and the brushroll motor sensor 133 correspond to the values associated with the vacuum cleaner 10 operating on a hard floor surface, or the like, the controller 116 operates the brushroll motor 108 at a second rotational speed that is lower than the first rotational speed, for example, between about 100 and 1000 RPM, or between about 300 and 600 RPM. Either or both of the pressure sensor 110 and the brushroll motor sensor 133 may be continually or intermittently used to alter the rotational speed of the brushroll motor 108 in response to the sensed data. In alternative embodiments, either the pressure sensor 110 or the brushroll motor sensor 133 may be omitted so that only the other of the pressure sensor 110 or the brushroll motor sensor 133 provides feedback used to alter the rotational speed of the brushroll motor 108.

While the vacuum cleaner 10 is in the "on/off mode," the pressure sensor 110 continually monitors the nozzle suction pressure; however, the brushroll motor sensor 133 may monitor the motor current and/or torque when the brushroll motor 108 is on. When the brushroll motor 108 is off, the motor current and/or torque will not provide data useful in determining the type of floor surface the floor nozzle 58 is on. When the sensed data of the pressure sensor 110 and the brushroll motor sensor 133 correspond to the values associated with the vacuum cleaner 10 operating on a carpet surface, the controller 116 operates the brushroll motor 108 (and the brushroll 94) at a first rotational speed. When the sensed data of the pressure sensor 110 and the brushroll motor sensor 133 correspond to the values associated with the vacuum cleaner 10 operating on a hard floor surface, or the like, the controller 116 turns the brushroll motor 108 off. While the floor nozzle 58 is operating on the hard floor surface and the brushroll motor 108 is off, the controller 116 relies on the pressure sensor 110 alone to determine whether to turn the brushroll motor 108 on. The controller 116 may use either or both of the sensors 110, 133, to determine whether to turn the brushroll motor 108 off.

In some embodiments, the vacuum cleaner 10 further includes a tachometer 155 that measures a rotational speed of the brushroll motor 108 or the brushroll 94 during operation (FIG. 11). The tachometer 155 can include one or more hall-effect sensors, optical encoders, or any other type of sensor suitable for measuring rotational speed.

The sensed brushroll speed data from the tachometer 155 can be used by the controller 116 in conjunction with data from the brushroll motor sensor 133 to maintain a relatively constant rotational speed of the brushroll 94. For example, when the brushroll 94 encounters increased resistance, such as when transitioning from a hard floor surface to a carpeted floor surface, the controller 116 may increase the current supplied to the brushroll motor 108 to increase the torque output by the brushroll motor 108. When the brushroll 94 encounters decreased resistance, such as when transitioning from a carpeted floor surface to a hard floor surface, the controller 116 may decrease the current supplied to the brushroll motor 108 to decrease the torque output by the brushroll motor 108. In such embodiments, the controller 116 compares the amount of current increase or decrease needed to maintain the speed of the brushroll 94 and compares the amount to a threshold current change value. If the current increase or decrease exceeds the threshold current value, then the controller 116 operates the brushroll 94 at a second speed instead of the first speed.

As the vacuum cleaner 10 passes from one surface type to another, the controller 116 uses the amount of current change needed to maintain a constant brushroll speed, as well as whether the current change is an increase or decrease to determine the kind of floor type the vacuum cleaner 10 is operating on, and the controller 116 adjusts the current supplied to the brushroll motor 108 to maintain the speed of the brushroll 94 at a speed desired for the particular floor type. In this way, the controller 116 determines the type of floor surface using the change in brushroll motor current needed to maintain a speed compared to predetermined thresholds and automatically operates the brushroll motor 108, and optionally the suction motor, in a manner corresponding to the type of floor surface. In some cases, the controller 116 may turn off the brushroll motor 108 if the current exceeds the threshold current value. The controller 116 may include overload protection programming.

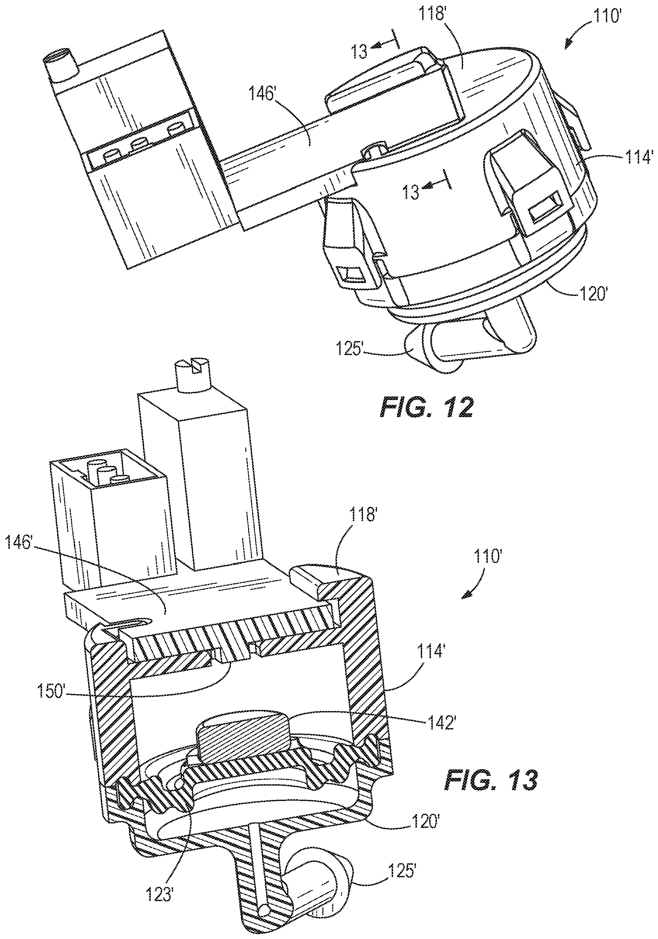

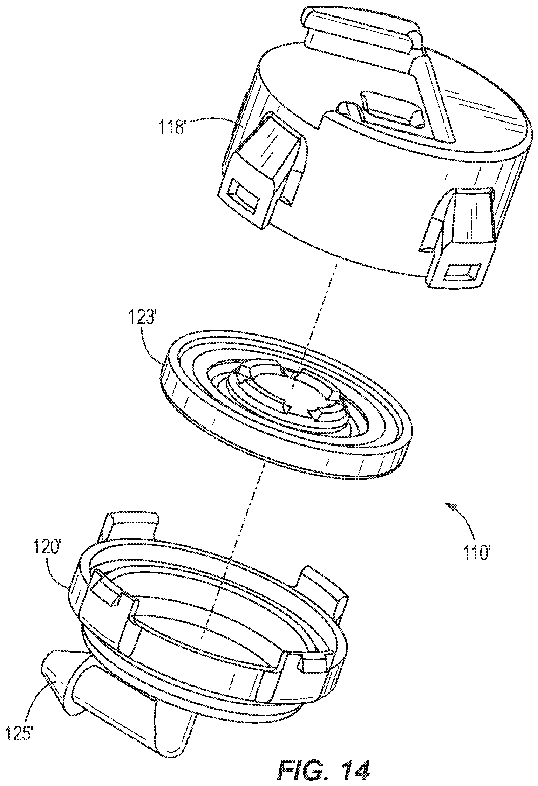

FIGS. 12-14 illustrate a pressure sensor 110' according to another embodiment that can be used in conjunction with the vacuum cleaner 10 (e.g., instead of the pressure sensor 110 or in addition to the pressure sensor 110).

The pressure sensor 110' includes a base portion 120' and a cap portion 118' that cooperate to define a pressure sensor housing 114'. In some embodiments, the base portion 120' is integrally formed with a wall bounding the airflow path of the vacuum cleaner 10. The housing 114' contains a diaphragm 123' holding a magnet 142' that is movable with respect to the housing 114' when the diaphragm 123' flexes (FIG. 13). The diaphragm 123' is sandwiched between the base portion 120' and the cap portion 118' such that the diaphragm 123' creates a substantially airtight seal between the base portion 120' and the cap portion 118'. Accordingly, the diaphragm 123' is subject to pressure forces resulting from any pressure imbalance between air contained within the base portion 120' and air contained within the cap portion 118'.

The air inlet of the pressure sensor 110' is configured as a fitting 125', such as a hose barb or nipple, a threaded fitting, compression fitting, or other fitting. In the illustrated embodiment, the fitting 125' extends from the base portion 120'. The fitting 125' can be integrally formed with the base portion 120' as a single piece, or alternatively, the fitting 125' can be formed separately and attached to the base portion 120' by threads or another type of suitable airtight connection. The fitting 125' (i.e. the air inlet for the pressure sensor 110') is in fluid communication with the suction chamber 70 such that the pressure at the sensor air inlet is representative of the pressure within the suction chamber 70. In some embodiments, the fitting 125' receives one end of a tube (not shown) that extends to the suction chamber 70 (e.g., to the pressure sensor inlet 122 (FIGS. 8 and 9) on the upper portion 62 of the floor nozzle 58) to allow for fluid communication between the pressure sensor 110' and the suction chamber 70. In other embodiments, the pressure sensor 110' can be directly connected to the suction chamber 70.

In the illustrated embodiment, a hall-effect sensor 150' is located on the cap portion 118' (FIG. 13). The hall-effect sensor 150' may be incorporated onto a circuit board 146'. Alternatively, all or a portion of the hall-effect sensor may be positioned on or adjacent the cap portion 118' and electrically connected to a circuit board positioned in a separate location. The cap portion 118' may include attachments for securing the circuit board 146' or the hall-effect sensor 150' to the cap portion 118'. In other embodiments, the hall-effect sensor 150' can be located on the base portion 120'. Negative pressure within the suction chamber 70 generated by the suction source pulls on the diaphragm 123', causing it to deform and move magnet 142' away from the circuit board 146' and the hall-effect sensor 150'. Therefore, the relative distance of magnet 142' from the hall-effect sensor 150' is correlated to the suction pressure within the chamber 70. Specifically, the higher the suction (i.e., the lower the pressure) within the suction chamber 70, the further the magnet 142' moves away from the hall-effect sensor 150', and vice versa. Accordingly, the hall-effect sensor 150' is used to determine a sensed pressure.

In some embodiments, the diaphragm 123' is a first diaphragm 123' that is interchangeable with a second diaphragm (not shown) having different deflection characteristics under pressure. In such embodiments, the first and second diaphragms can be interchanged in order to vary the responsiveness or operating pressure range of the pressure sensor 110'. In one embodiment, the first diaphragm 123' has a first attribute selected from a group consisting of thickness, durometer, shape, and material, and where the first diaphragm is replaceable with a second diaphragm having a second attribute selected from a group consisting of thickness, durometer, shape, and material. For example, the first diaphragm 123' may be made from a polyurethane material and the second diaphragm may be made from butyl rubber providing different response characteristics. In another example, the first diaphragm 123' may have a flat shape or uniform thickness and the second diaphragm may have a concave shape that is thicker near its perimeter, or alternatively thinner near its perimeter, providing different response characteristics, or in yet another alternative, the second diaphragm may have a shape having ribs, apertures, protrusions, grooves, or other shapes. In another example, the first diaphragm 123' may have a durometer of 25 Shore A and the second diaphragm may have a durometer of 40 Shore A, providing different response characteristics. In another example, the second diaphragm may be thinner than the first diaphragm 123' and therefore experience greater deflection than the first diaphragm 123' at a particular pressure difference between the base portion 120' and the cap portion 118'.

For particular embodiments, the diaphragm 123' may be made from materials such as butyl rubber, polyurethane, silicone rubber, and other synthetic rubbers, thermoplastic elastomer (TPE), rubber, thermoplastic vulcanizates (TPV), thermoplastics, and other materials to provide response characteristics under pressure as desired for the application. The diaphragm 123' may have a durometer between about 15 and 80 Shore A, or for particular embodiments between about 20 and 40 Shore A, or other hardnesses as desired to provide response characteristics under pressure as desired for the application. In one embodiment, the diaphragm 123' is a thermoplastic elastomer having a durometer between 20 and 30 Shore A.

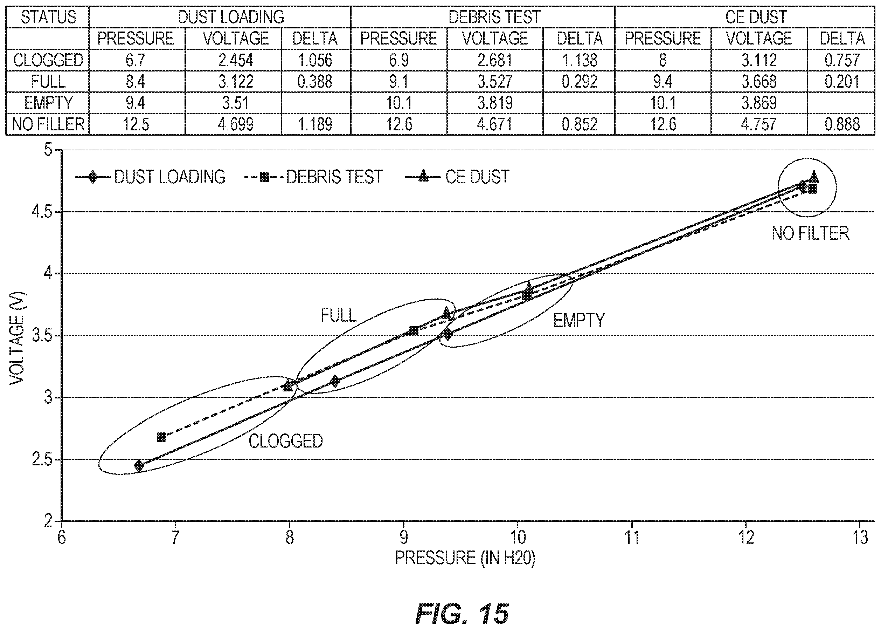

It was found that the pressure sensor 110, 110' positioned in the air flow path of the vacuum cleaner 10 can be used indicate more than one system condition, as shown in FIG. 15. For example, if the user does not install a filter (e.g., a pre-motor filter or a post-motor filter in some embodiments), the pressure reading at the sensor 110, 110' will be higher than if the filter were installed. When the pressure exceeds a predetermined threshold, the controller 116 may illuminate a signal to the user indicating that the filter is missing, and/or may turn off the suction motor to prevent damage to the vacuum cleaner 10.

Another common condition occurs when the dirt cup 46 is filled with debris and needs to be emptied. The pressure reading at the sensor 110, 110' decreases as the dirt cup 46 fills, and when the pressure reaches a predetermined value, the controller 116 may illuminate a signal to the user indicating that the dirt cup 46 is full, and/or may turn off the suction motor. When the sensor 110, 110' indicates a normal operating pressure, the controller 116 may provide a signal, such as a light or other display, to the user to indicate that the vacuum 10 is operating normally.

In certain conditions, the vacuum cleaner 10 may pick up a large object or enough debris to form a blockage in the air path, or a filter or filter bag in the vacuum may become clogged (i.e. may contain enough debris that vacuum cleaner performance is reduced). When a clog occurs, the system pressure, as measured by the sensor 110, 110', drops. When the pressure drops to a predetermined level, the controller 116 may provide a signal such as a light or other display to the user indicating that a clog has developed, and/or may turn off the suction motor.

Accordingly, one pressure sensor 110, 110' may be positioned in fluid communication with the air path of the vacuum cleaner 10 to provide system information for a variety of operating conditions. In one embodiment, one pressure sensor 110, 1 10' may be positioned in fluid communication with the air path of the vacuum cleaner 10 to provide two or more indications of system performance selected from a group consisting of system clogged, filter bag full, dirt bin full, no filter present, no filter bag present, dirt bin empty, filter bag empty, and normal operation. Alternatively, one pressure sensor 110, 110' may be positioned in fluid communication with the air path of the vacuum cleaner 10 to provide three or more indications of system performance selected from a group consisting of system clogged, filter bag full, dirt bin full, no filter present, no filter bag present, dirt bin empty, filter bag empty, and normal operation. In yet another alternative, one pressure sensor 110, 110' may be positioned in fluid communication with the air path of the vacuum cleaner 10 to provide four or more indications of system performance selected from a group consisting of system clogged, filter bag full, dirt bin full, no filter present, no filter bag present, dirt bin empty, filter bag empty, and normal operation. In such embodiments, the controller 116 continuously or periodically monitors the pressure sensor and provides a signal such as a light or other display to the user indicating a system condition, and/or may turn off the suction motor.

Various features and advantages of the invention are set forth in the following claims.

## Claims

1. A vacuum cleaner (10) comprising:
a base (14) including a floor nozzle (58), the floor nozzle (58) defining a suction chamber (70);
a brushroll (94) driven by a brushroll motor (108);
a brushroll motor sensor (133) configured to measure an electrical current used by the brushroll motor (108);
a pressure sensor (110) configured to measure an internal pressure within the vacuum cleaner (10); and
a controller (116) in communication with the brushroll motor sensor (133) and the pressure sensor (110),
**characterized in that**
the controller (116) is operable to control an operating speed of the brushroll motor (108) based on feedback received from the pressure sensor (110) and the brushroll motor sensor (133).

2. The vacuum cleaner (10) of claim 1, further comprising a dirt cup (46), wherein the controller (116) is operable to determine a fullness level of the dirt cup (46) based on feedback received from the pressure sensor (110).

3. The vacuum cleaner (10) of claim 1, further comprising a filter, wherein the controller (116) is operable to determine if the filter is present based on feedback received from the pressure sensor (110).

4. The vacuum cleaner (10) of claim 1, further comprising a filter, wherein the controller (116) is operable to determine if the filter is clogged based on feedback received from the pressure sensor (110).

5. The vacuum cleaner (10) of claim 1, further comprising a filter housing and a filter received within the filter housing, wherein the pressure sensor (110) is located within the filter housing.

6. The vacuum cleaner (10) of claim 1, wherein the pressure sensor (110) is located within the floor nozzle (58).

7. The vacuum cleaner (10) of claim 1, wherein the pressure sensor (110) includes
a housing (114) including a cap portion (118) connected to a base portion (120'),
a diaphragm (123') supporting a magnet (142') in the housing (114), the diaphragm and base portion (120') defining a chamber arranged in fluid communication with an airflow path of the vacuum cleaner (10), the diaphragm (123') moveable within the chamber in response to changes in the internal pressure of the vacuum cleaner (10), and
a hall-effect sensor (150') configured to measure a relative distance between the magnet (142') and the hall-effect sensor (150').

8. The vacuum cleaner (10) of claim 7, wherein the diaphragm (123') is sandwiched between the cap portion (118) and the base portion (120').

9. The vacuum cleaner of claim 1, wherein at least a portion of the pressure sensor (110) is formed integrally with the base (14) or the handle (18) of the vacuum cleaner (10).

10. The vacuum cleaner (10) of claim 1, wherein the pressure sensor (110) is positioned in fluid communication with an air path of the vacuum cleaner (10) to provide two or more indications of system performance selected from a group consisting of system clogged, filter bag full, dirt bin full, no filter present, no filter bag present, dirt bin empty, filter bag empty, and normal operation.

11. A method of controlling a brushroll motor (108) in a vacuum cleaner (10), the method comprising:
sensing a pressure within the vacuum cleaner (10);
sensing a motor current of the brushroll motor (108) used to drive a brushroll (94);
comparing the sensed pressure with one or more reference pressure values;
comparing the sensed motor current with one or more reference current values; and
**characterized by**
controlling operation of the brushroll motor (108) based on the sensed pressure and the sensed motor current,
wherein controlling operation of the brushroll motor (108) includes turning the brushroll motor (108) on based on the sensed pressure.

12. The method of claim 11, wherein controlling operation of the brushroll motor (108) further includes altering an operating speed of the brushroll motor (108) based on at least one of the sensed pressure or sensed motor current.

13. The method of claim 11, wherein controlling operation of the brushroll motor (108) further includes turning the brushroll motor (108) off based on at least one of the sensed pressure or the sensed motor current.

14. The method of claim 13, wherein turning the brushroll motor (108) off is based on both the sensed pressure and the sensed motor current.

15. The method of claim 11, further comprising
providing a first mode in which controlling operation of the brushroll motor (108) further includes altering an operating speed of the brushroll motor (108) based on at least one of the sensed pressure or the sensed motor current;
providing a second mode in which controlling operation of the brushroll motor (108) further includes turning the brushroll motor (108) off based on at least one of the sensed pressure or the sensed motor current; and
providing a switch to selectively choose the first mode or the second mode.

## Patentansprüche

1. Staubsauger (10), umfassend:
Eine Basis (14) einschließlich einer Bodendüse (58), wobei die Bodendüse (58) eine Saugkammer (70) definiert;
eine von einem Bürstenrollen-Motor (108) angetriebene Bürstenrolle (94);
einen Bürstenrollen-Motorsensor (133), der ausgelegt ist, einen vom Bürstenrollen-Motor (108) verbrauchten elektrischen Strom zu messen;
einen Drucksensor (110), der ausgelegt ist, einen Innendruck innerhalb des Staubsaugers (10) zu messen; und
einen Controller (116) in Kommunikation mit dem Bürstenrollen-Motorsensor (133) und dem Drucksensor (110),
**dadurch gekennzeichnet, dass** der Controller (116) betreibbar ist, eine Betriebsgeschwindigkeit des Bürstenrollen-Motors (108) auf Basis von Feedback zu steuern, das vom Drucksensor (110) und dem Bürstenrollen-Motorsensor (133) empfangen wurde.

2. Staubsauger (10) nach Anspruch 1, der ferner einen Schmutzbehälter (46) umfasst, wobei der Controller (116) betreibbar ist, einen Füllgrad des Schmutzbehälters (46) auf Basis von Feedback, das vom Drucksensor (110) empfangen wurde, zu ermitteln.

3. Staubsauger (10) nach Anspruch 1, der ferner einen Filter umfasst, wobei der Controller (116) betreibbar ist, auf Basis von Feedback, das vom Drucksensor (110) empfangen wurde, zu ermitteln, ob der Filter vorhanden ist.

4. Staubsauger (10) nach Anspruch 1, der ferner einen Filter umfasst, wobei der Controller (116) betreibbar ist, auf Basis von Feedback, das vom Drucksensor (110) empfangen wurde, zu ermitteln, ob der Filter verstopft ist.

5. Staubsauger (10) nach Anspruch 1, der ferner ein Filtergehäuse und einen Filter umfasst, der Innerhalb des Filtergehäuses aufgenommen ist, wobei sich der Drucksensor (110) innerhalb des Filtergehäuses befindet.

6. Staubsauger (10) nach Anspruch 1, wobei sich der Drucksensor (110) innerhalb der Bodendüse (58) befindet.

7. Staubsauger (10) nach Anspruch 1, wobei der Drucksensor (110) einschließt:
Ein Gehäuse (114), das einen Kappenabschnitt (118) einschließt, der mit einem Basisabschnitt (120') verbunden ist, eine Membran (123'), die einen Magnet (142') im Gehäuse (114) trägt, wobei die Membran und der Basisabschnitt (120') eine Kammer definieren, die in Fluidverbindung mit einem Luftstromweg des Staubsaugers (10) steht,
wobei die Membran (123') innerhalb der Kammer als Reaktion auf Änderungen des Innendrucks des Staubsaugers (10) beweglich ist, und
einen Hall-Effekt-Sensor (150'), der ausgelegt ist, einen relativen Abstand zwischen dem Magnet (142') und dem Hall-Effekt-Sensor (150') zu messen.

8. Staubsauger (10) nach Anspruch 7, wobei die Membran (123') sandwichartig zwischen dem Kappenabschnitt (118) und dem Basisabschnitt (120') angeordnet ist.

9. Staubsauger nach Anspruch 1, wobei zumindest ein Abschnitt des Drucksensors (110) integral mit der Basis (14) oder dem Griff (18) des Staubsaugers (10) geformt ist.

10. Staubsauger (10) nach Anspruch 1, wobei der Drucksensor (110) in Fluidverbindung mit einem Luftweg des Staubsaugers (10) positioniert ist, um zwei oder mehr Anzeigen von System-Performance bereitzustellen, die aus einer Gruppe selektiert sind, die besteht aus:
System verstopft, Filterbeutel voll, Schmutzbehälter voll, kein Filter vorhanden, kein Filterbeutel vorhanden, Schmutzbehälter leer, Filterbeutel leer und Normalbetrieb.
**gekennzeichnet durch**
Steuern des Betriebs des Bürstenrollen-Motors (108) auf Basis des abgetasteten Drucks und des abgetasteten Motorstroms,
wobei das Steuern des Betriebs des Bürstenrollen-Motors (108) das Drehen des Bürstenrollen-Motors (108) auf Basis des abgetasteten Drucks einschließt.

11. Verfahren zur Steuerung eines Bürstenrollen-Motors (108) in einem Staubsauger (10), wobei das Verfahren umfasst:
Abtasten eines Drucks innerhalb des Staubsaugers (10);
Abtasten eines Motorstroms des Bürstenrollen-Motors (108), der zum Antrieb einer Bürstenrolle (94) verwendet wird;
Vergleichen des abgetasteten Drucks mit einem oder mehreren Referenzdruckwerten; und

12. Verfahren nach Anspruch 11, wobei der steuernde Betrieb des Bürstenrollen-Motors (108) ferner die Änderung einer Betriebsgeschwindigkeit des Bürstenrollen-Motors (108) auf Basis zumindest des abgetasteten Drucks oder des abgetasteten Motorstroms einschließt.

13. Verfahren nach Anspruch 11, wobei der steuernde Betrieb des Bürstenrollen-Motors (108) ferner das Abschalten des Bürstenrollen-Motors (108) auf Basis zumindest des abgetasteten Drucks oder des abgetasteten Motorstroms einschließt.

14. Verfahren nach Anspruch 13, wobei das Abschalten des Bürstenrollen-Motors (108) auf sowohl dem abgetasteten Druck als auch dem abgetasteten Motorstrom beruht.

15. Verfahren nach Anspruch 11, ferner umfassend:
Bereitstellen eines ersten Modus, in welchem der steuernde Betrieb des Bürstenrollen-Motors (108) ferner die Änderung einer Betriebsgeschwindigkeit des Bürstenrollen-Motors (108) auf Basis zumindest des abgetasteten Drucks oder des abgetasteten Motorstroms einschließt;
Bereitstellen eines zweiten Modus, in welchem der steuernde Betrieb des Bürstenrollen-Motors (108) ferner das Abschalten des Bürstenrollen-Motors (108) auf Basis zumindest des abgetasteten Drucks oder des abgetasteten Motorstroms einschließt; und
Bereitstellen eines Schalters, um selektiv den ersten Modus oder den zweiten Modus zu wählen.

## Revendications

1. Aspirateur (10) comprenant :
une base (14) comportant une buse de sol (58), la buse de sol (58) définissant une chambre d'aspiration (70) ;
un cylindre brosseur (94) entraîné par un moteur de cylindre brosseur (108) ;
un capteur de moteur de cylindre brosseur (133) conçu pour mesurer un courant électrique utilisé par le moteur de cylindre brosseur (108) ;
un capteur de pression (110) conçu pour mesurer une pression interne à l'intérieur de l'aspirateur (10) ; et
un dispositif de commande (116) en communication avec le capteur de moteur de cylindre brosseur (133) et le capteur de pression (110),
**caractérisé en ce que** le dispositif de commande (116) est conçu pour commander une vitesse de fonctionnement du moteur de cylindre brosseur (108) en se basant sur le retour reçu en provenance du capteur de pression (110) et du capteur de moteur de cylindre brosseur (133).

2. Aspirateur (10) selon la revendication 1, comprenant en outre un sac à poussière (46), dans lequel le dispositif de commande (116) peut fonctionner pour déterminer un niveau de remplissage du sac à poussière (46) en se basant sur le retour reçu en provenance du capteur de pression (110).

3. Aspirateur (10) selon la revendication 1, comprenant en outre un filtre, dans lequel le dispositif de commande (116) peut fonctionner pour déterminer la présence du filtre en se basant sur le retour reçu en provenance du capteur de pression (110).

4. Aspirateur (10) selon la revendication 1, comprenant en outre un filtre, dans lequel le dispositif de commande (116) peut fonctionner pour déterminer si le filtre est colmaté en se basant sur le retour reçu en provenance du capteur de pression (110).

5. Aspirateur (10) selon la revendication 1, comprenant en outre un boîtier de filtre et un filtre que loge le boîtier de filtre, dans lequel le capteur de pression (110) est situé à l'intérieur du boîtier de filtre.

6. Aspirateur (10) selon la revendication 1, dans lequel le capteur de pression (110) est situé à l'intérieur de la buse de sol (58).

7. Aspirateur (10) selon la revendication 1, dans lequel le capteur de pression (110) comporte un boîtier (114) comprenant une partie (118) connectée à une partie base (120'), un diaphragme (123') supportant un aimant (142') dans le boîtier (114), la partie diaphragme et base (120') définissant une chambre agencée en communication fluide avec un circuit de circulation d'air de l'aspirateur (10), le diaphragme (123') pouvant se déplacer à l'intérieur de la chambre en réponse aux changements de la pression interne de l'aspirateur (10), et un capteur à effet Hall (150') conçu pour mesurer une distance relative entre l'aimant (142') et le capteur à effet Hall (150').

8. Aspirateur (10) selon la revendication 1, dans lequel le diaphragme (123') est logé entre la partie couvercle (118) et la partie base (120').

9. Aspirateur (10) selon la revendication 1, dans lequel au moins une partie du capteur de pression (110) est intégralement liée à la base (14) ou à la poignée (18) de l'aspirateur (10).

10. Aspirateur (10) selon la revendication 1, dans lequel le capteur de pression (110) est situé en communication fluide avec un circuit d'air de l'aspirateur (10) pour fournir deux ou plusieurs indications de la performance du système sélectionnée à partir d'un groupe où le système est colmaté, le sac de filtre est plein, le collecteur de poussière est plein, où le filtre est absent, le sac de filtre est absent, où le collecteur de poussière est vide, le sac de filtre est vide, et qui fonctionne normalement normale.

11. Procédé de commande d'un moteur de cylindre brosseur (108) dans un aspirateur (10), le procédé consistant à :
capter une pression à l'intérieur de l'aspirateur (10) ;
capter un courant moteur du moteur de cylindre moteur (108) utilisé pour entraîner un cylindre brosseur (94) ;
comparer la pression captée à une ou plusieurs valeurs de pression de référence ;
comparer le courant moteur capté à une ou plusieurs valeurs de courant de référence ; et
**caractérisé par**
la commande du fonctionnement du moteur de cylindre brosseur (108) en se basant sur la pression captée et sur le courant moteur capté, dans lequel la commande de fonctionnement du moteur de cylindre brosseur (108) comprend l'activation du moteur de cylindre brosseur (108) en se basant sur la pression captée.

12. Procédé selon la revendication 1, dans lequel la commande de fonctionnement du moteur de cylindre brosseur (108) comprend en outre la modification d'une vitesse de fonctionnement du moteur de cylindre brosseur (108) en se basant sur au moins soit la pression captée soit le courant moteur capté.

13. Procédé selon la revendication 11, dans lequel la commande de fonctionnement du moteur de cylindre brosseur (108) comprend en outre la désactivation du moteur de cylindre brosseur (108) en se basant sur au moins soit la pression captée soit le courant moteur capté.

14. Procédé selon la revendication 13, dans lequel la désactivation du moteur de cylindre brosseur (108) est basée sur à la fois la pression captée et le courant moteur capté.

15. Procédé selon la revendication 11, consistant en outre à :
prévoir un premier mode dans lequel la commande de fonctionnement du moteur de cylindre brosseur (108) comprend en outre la modification d'une vitesse de fonctionnement du moteur de cylindre brosseur (108) basée sur au moins soit la pression captée soit le courant moteur capté ;
prévoir un deuxième mode dans lequel la commande de fonctionnement du moteur de cylindre brosseur (108) comprend en outre la désactivation du moteur de cylindre brosseur (108) basée sur au moins soit la pression captée soit le courant moteur capté ; et
prévoir un commutateur pour sélectivement choisir le premier mode ou le deuxième mode.
